# EUROPEAN PATENT APPLICATION

(11) **EP 4 656 459 A1**
(43) Date of publication of application: **03.12.2025**
(21) Application number: 24220609.2
(22) Date of filing: 17.12.2024
(51) Int. Cl.: B60Q 11/00

(54) **VEHICLE LIGHT CONTROL METHOD AND VEHICLE THEREOF**

(30) Priority: 30.05.2024 TW 113120025
(71) Applicant: Kwang Yang Motor Co., Ltd., Kaohsiung City (TW)
(72) Inventor: HSIEH, Hsin-Yen, Kaohsiung (TW)
(74) Representative: Viering, Jentschura & Partner mbB Patent- und Rechtsanwälte

(57) **Abstract**

A vehicle light control method is executed by a vehicle (100, 210) and applied to the vehicle (100, 210). The vehicle light control method includes the following steps: scanning for a specific electronic device (230) through a wireless network by a processing unit (140) of the vehicle (100, 210) (S310, S410, S510); when the vehicle (100, 210) is detecting a specific electronic device (230) and connecting to the specific electronic device (230), switching on a vehicle light (110) of the vehicle (100, 210) (S330); and when the vehicle (100, 210) is disconnected with the specific electronic device (230), switching off the vehicle light (110) of the vehicle (100, 210) (S350). The vehicle light control method helps flexibly control the vehicle light (110) of the vehicle (100, 210).

## Description

### 1. Field of the Invention

The present invention relates to a vehicle light control method and vehicle thereof, more particularly a smart control method capable of controlling a vehicle's light according to a signal received from a specific electronic device and vehicle thereof.

### 2. Description of the Related Art

As information technology continuously advances in recent years, vehicles have progressively become smarter. Apart from having a basic function of transportation, vehicles are continuously developed and upgraded by various industries to be safer and having more peripheral applications and functionalities.

On the other hand, as the world gains environmental awareness, and as electric vehicle technology advances, more traditional vehicles that burn fossil fuels for power are replaced by electric vehicles that utilize electric power. For vehicle industries, a transition from traditional vehicles to electric vehicles is an important goal, and this transition also popularizes the electric vehicles in a society. Generally, an electric vehicle contains significantly more electronic components/devices than a traditional vehicle, and these additional electronic components/devices may be configured to connect to a mobile device of a user for providing more personalized applications and functionalities, thus enriching the user's experience in the electric vehicle.

For example, some vehicles provide a function of delay automatically switching off a vehicle's light after the vehicle is parked. When the user of the vehicle switches off the engine, the vehicle would keep its light on for a period of time, thus providing light for safety and convenience for the user as the user might have parked the vehicle in a dark environment. However, currently the vehicle may only keep the light on for a default amount of time. This default amount of time for keeping the light on is inflexible, and lacks considerations to accommodate the user's various needs in different situations.

To overcome the aforementioned shortcomings, the present invention provides a vehicle light control method and vehicle thereof.

In an embodiment of the present invention, the vehicle light control method is applied to a vehicle. First, a processing unit of the vehicle scans for a specific electronic device through a wireless network. When the specific electronic device is detected and connected to the vehicle through the wireless network, a vehicle light of the vehicle is switched on. When the specific electronic device disconnects with the vehicle, the vehicle light of the vehicle is switched off.

In an embodiment of the present invention, a vehicle includes a vehicle light, a network connection unit, and a processing unit. The network connection unit is connected to a wireless network. Through the network connection unit, the processing unit scans for a specific electronic device through the wireless network. When the specific electronic device is detected and connected to the vehicle through the wireless network, the processing unit switches on the vehicle light of the vehicle, and when the specific electronic device disconnects with the vehicle, the processing unit switches off the vehicle light of the vehicle.

In some embodiments, the vehicle light control method includes: when the specific electronic device is detected and connected to the vehicle through the wireless network, switching on the vehicle light for a default period of time; and when within the default period of time the specific electronic device disconnects with the vehicle, switching off the vehicle light.

In some embodiments, the vehicle light control method includes: determining whether an ignition switch of the vehicle is switched on or switched off; when the ignition switch of the vehicle is switched off, and when the specific electronic device is detected and connected to the vehicle through the wireless network, switching on the vehicle light.

In some embodiments, the vehicle light control method includes: when the ignition switch of the vehicle is switched off, and when the specific electronic device is detected and connected to the vehicle through the wireless network, switching on the vehicle light for a default period of time.

In some embodiments, the vehicle light control method includes: after the default period of time has passed, determining whether the specific electronic device is still connected to the vehicle through the wireless network; when the specific electronic device is still connected to the vehicle through the wireless network after the default period of time, keeping the vehicle light switched on until the specific electronic device disconnects with the vehicle.

The vehicle light control method mentioned above is programmed as a sequence of codes. When the sequence of codes is loaded and compiled by a machine, the machine is considered a device that executes the vehicle light control method of the present invention.

To better demonstrate purposes, features, and benefits of the present invention, please refer to the subsequent embodiments of the present invention with detailed descriptions and figures.

### IN THE DRAWINGS

Fig. 1 is a block diagram of an embodiment of a vehicle of the present invention.
Fig. 2 is a block diagram of an embodiment of the vehicle of the present invention connecting to a specific electronic device.
Fig. 3 is a flow chart of an embodiment of a vehicle light control method of the present invention.
Fig. 4 is a flow chart of another embodiment of the vehicle light control method of the present invention.
Fig. 5 is a flow chart of another embodiment of the vehicle light control method of the present invention.
Fig. 6 is a flow chart of another embodiment of the vehicle light control method of the present invention.

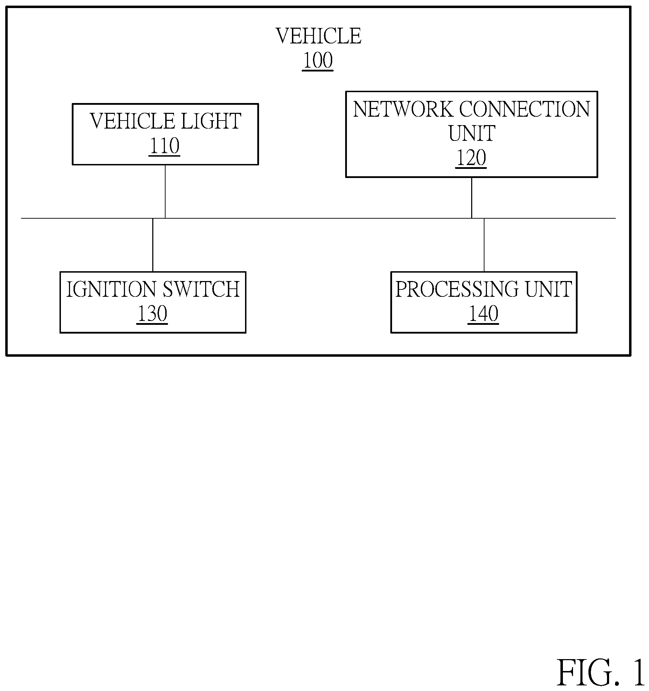

With reference to Fig. 1, Fig. 1 shows a block diagram of an embodiment of a vehicle of the present invention. A vehicle 100 is free to be of any models or types. In some embodiments, the vehicle 100 is an electric vehicle, such as an electric scooter or an electric car. As shown in Fig. 1, the vehicle 100 includes a vehicle light 110, a network connection unit 120, an ignition switch 130, and a processing unit 140. The vehicle light 110 is mounted on the vehicle 100. In some embodiments, the vehicle light 110 is a headlight of the vehicle 100, and in other embodiments, the vehicle light 110 may also be any other lights on the vehicle, such as an indicator light, a daytime running lamp (DRL), a brake light, or a reversing light, etc. The network connection unit 120 is connected to a network, thus allowing the vehicle 100 to have communications to the network. In some embodiments, the network may be a wired network, a telecommunication network, or a wireless network, such as a Wi-Fi network or a Bluetooth network. The ignition switch 130 is configured to control whether the vehicle is switched on. The processing unit 140 controls both hardware and software of the vehicle. As shown in Fig. 1, the processing unit 140 is electrically connected to the vehicle light 110, the network connection unit 120, and the ignition switch 130. Furthermore, the processing unit 140 is configured to execute the vehicle light control method of the present invention. The vehicle light control method of the present invention would be explained subsequently.

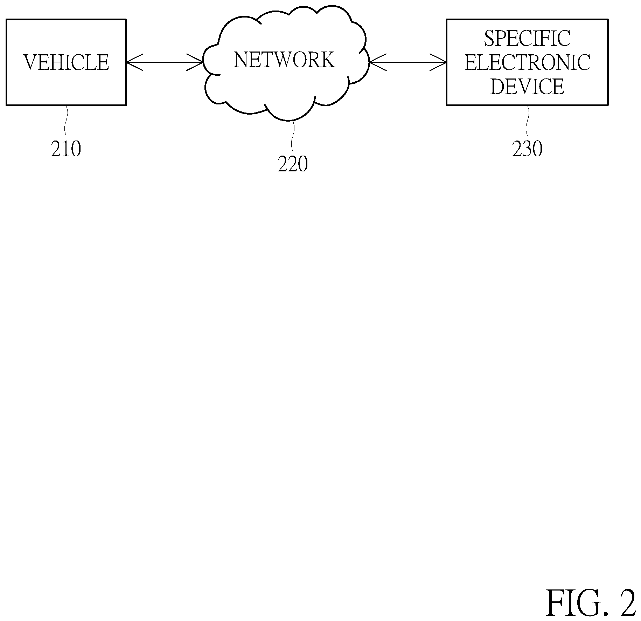

With reference to Fig. 2, Fig. 2 presents a block diagram of an embodiment of the vehicle of the present invention connecting to a specific electronic device. In Fig. 2, a vehicle 210 is connected to a specific electronic device 230 through a network 220. Please note that the specific electronic device 230 is free to be any electronic device capable of connecting to a network. For example, the specific electronic device 230 may be a mobile device, a Beacon, or a wireless key. The network 220 may be a wired network, a telecommunication network, or a wireless network, such as a Wi-Fi network or a Bluetooth network.

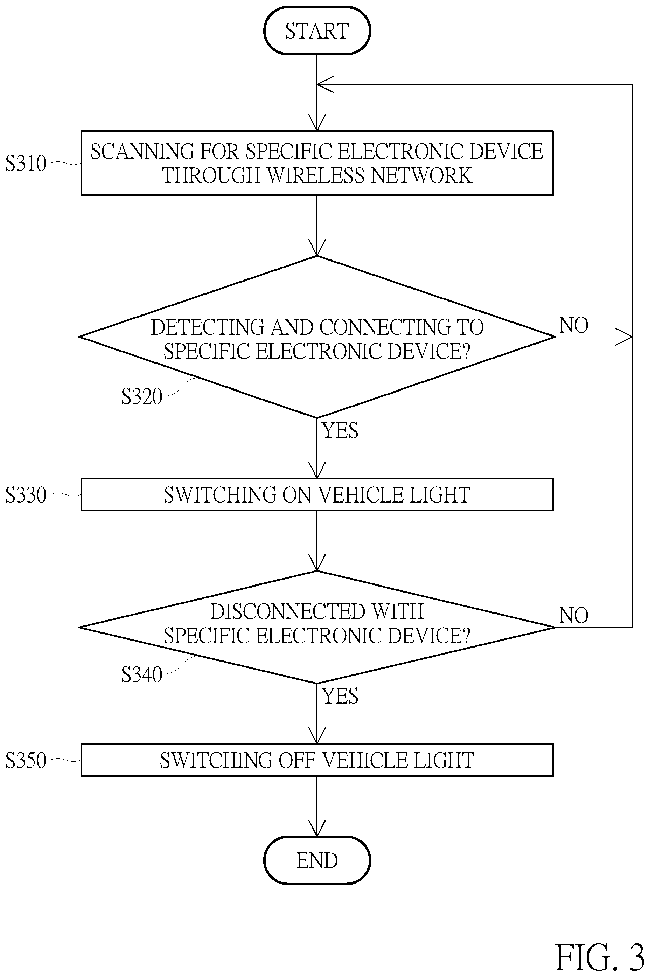

With reference to Fig. 3, Fig. 3 presents a flow chart of an embodiment of the vehicle light control method of the present invention. The vehicle light control method of the present invention is executed by a processing unit of a vehicle to control a vehicle light of the vehicle.

The vehicle light control method includes the following steps:
step S310: scanning for a specific electronic device through a wireless network;
step S320: determining whether the vehicle is detecting the specific electronic device and connecting to the specific electronic device; when the vehicle is not detecting the specific electronic device or is not connecting to the specific electronic device, executing step S310;
in other words, when the specific electronic device is not detected by the vehicle or is not connected to the vehicle, the processing unit of the vehicle executes step S310;
step S330: when the vehicle is detecting the specific electronic device and connecting to the specific electronic device, switching on the vehicle light of the vehicle;
step S340: determining whether the vehicle is disconnected with the specific electronic device; when the vehicle is connected with the specific electronic device, executing S310;
step S350: when the vehicle is disconnected with the specific electronic device, switching off the vehicle light of the vehicle.

First, as shown in step S310, a specific electronic device is scanned through a wireless network. Please note that in some embodiments, the wireless network may be a Wi-Fi network or a Bluetooth network. Moreover, in some embodiments, the specific electronic device may establish a connection with the processing unit or the network connection unit in advance, thus allowing the vehicle to obtain in advance an identification data for connecting to the specific electronic device. In some embodiments, the specific electronic device may be a mobile device, such as a smart device, a Beacon, or a wireless key. When the specific electronic device is not detected (corresponding to step S320's no), the execution of steps returns to step S310. When the specific electronic device is detected and is connected to the vehicle (corresponding to step S320's yes), then as shown in step S330, a vehicle light of the vehicle is switched on. Please note that the vehicle light may be configured to be mounted on the vehicle. Moreover, in some embodiments, the vehicle light may be a headlight of the vehicle. In some embodiments, the vehicle light may be any lights on the vehicle, such as a headlight, an indicator light, a daytime running lamp (DRL), a brake light, or a reversing light, etc. Furthermore, as shown in step S340, whether the vehicle is disconnected with the specific electronic device is determined. When the vehicle is not disconnected with the specific electronic device (corresponding to step S340's no), the execution of steps returns to step S310. When the vehicle is disconnected with the specific electronic device (corresponding to step S340's yes), then as shown in step S350, the vehicle light of the vehicle is switched off.

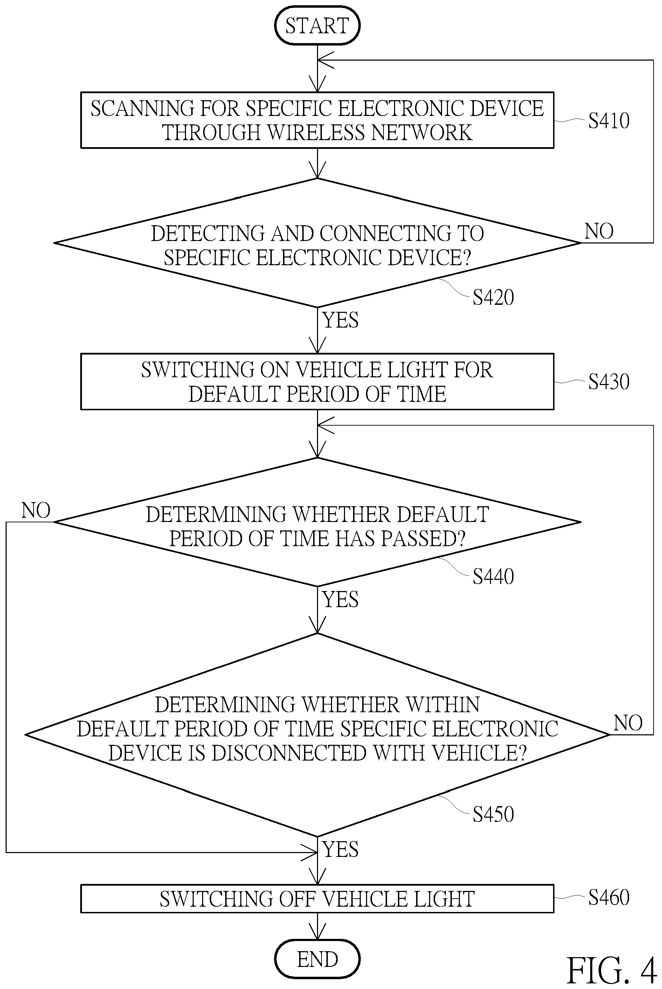

With reference to Fig. 4, Fig. 4 presents a flow chart of another embodiment of the vehicle light control method of the present invention. The vehicle light control method of the present invention is executed by a processing unit of a vehicle to control a vehicle light of the vehicle.

The vehicle light control method includes the following steps:
step S410: scanning for a specific electronic device through a wireless network;
step S420: determining whether the vehicle is detecting the specific electronic device and connecting to the specific electronic device; when the vehicle is not detecting the specific electronic device or is not connecting to the specific electronic device, executing step S410;
in other words, when the specific electronic device is not detected by the vehicle or is not connected to the vehicle, the processing unit of the vehicle executes step S410;
step S430: when the vehicle is detecting the specific electronic device and connecting to the specific electronic device, switching on the vehicle light of the vehicle for a default period of time;
step S440: determining whether the default period of time has passed; when the default period of time has passed, executing step S460;
step S450: when the default period of time has yet to pass, determining whether within the default period of time the vehicle is disconnected with the specific electronic device; when within the default period of time the vehicle is still connected to the specific electronic device, executing step S440;
in other words, when determining that within the default period of time the specific electronic device is not disconnected with the vehicle, the processing unit of the vehicle executes step S440;
step S460: when within the default period of time the vehicle is disconnected with the specific electronic device, switching off the vehicle light of the vehicle;
in other words, when determining that within the default period of time the specific electronic device is disconnected with the vehicle, the processing unit of the vehicle switches off the vehicle light.

First, as shown in step S410, a specific electronic device is scanned through a wireless network. Similarly, in some embodiments, the wireless network may be a Wi-Fi network or a Bluetooth network. Similarly, in some embodiments, the specific electronic device may establish a connection with the processing unit or the network connection unit in advance, thus allowing the vehicle to obtain in advance an identification data for connecting to the specific electronic device. In some embodiments, the specific electronic device may be a mobile device, such as a smart device, a Beacon, or a wireless key. When the specific electronic device is not detected (corresponding to step S420's no), the execution of steps returns to step S410. When the specific electronic device is detected and is connected to the vehicle (corresponding to step S420's yes), then as shown in step S430, a vehicle light of the vehicle is switched on for a default period of time, such as switched on for two minutes. Please note that the vehicle light may be configured to be mounted on the vehicle. Moreover, in some embodiments, the vehicle light may be a headlight of the vehicle. In some embodiments, the vehicle light may be any lights on the vehicle, such as a headlight, an indicator light, a daytime running lamp (DRL), a brake light, or a reversing light, etc. Furthermore, as shown in step S440, whether the default period of time has passed is determined. When the default period of time has passed (corresponding to step S440's yes), then as shown in step S460, the vehicle light of the vehicle is switched off. When the default period of time has not yet passed (corresponding to step S440's no), then as shown in step S450, whether within the default period of time the vehicle is disconnected with the specific electronic device is determined. When within the default period of time the vehicle is not disconnected with the specific electronic device (corresponding to step S450's no), then the execution of steps returns to step S440. When within the default period of time the vehicle is disconnected with the specific electronic device (corresponding to step S450's yes), then as shown in step S460, the vehicle light of the vehicle is switched off. In the present embodiment, when within the default period of time the specific electronic device is disconnected with the vehicle, the vehicle light is switched off ahead of the end of the default period of time.

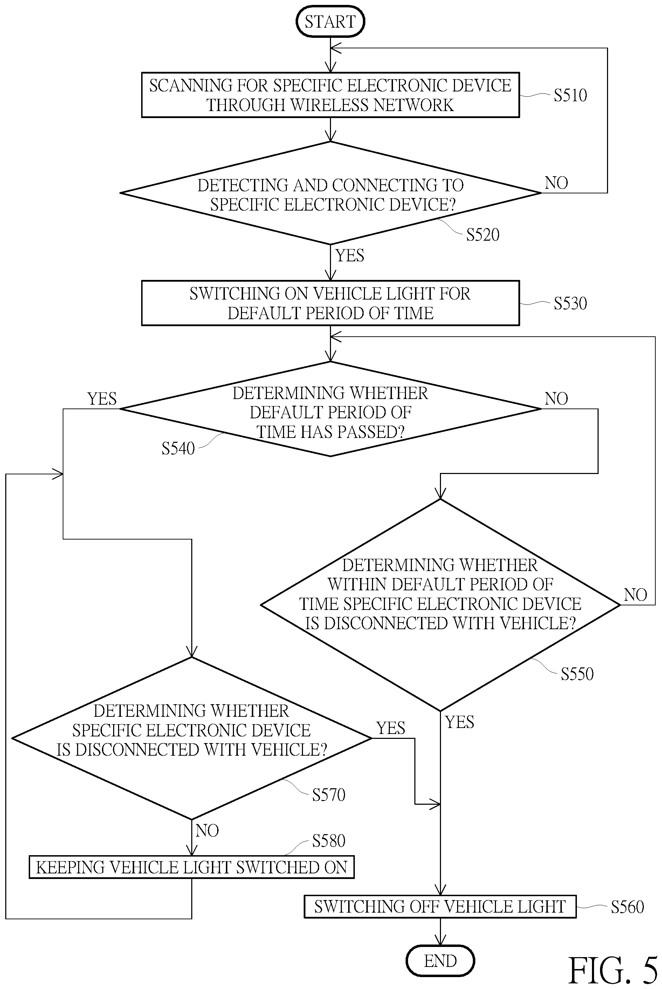

With reference to Fig. 5, Fig. 5 presents a flow chart of another embodiment of the vehicle light control method of the present invention. The vehicle light control method of the present invention is executed by a processing unit of a vehicle to control a vehicle light of the vehicle.

The vehicle light control method includes the following steps:
step S510: scanning for a specific electronic device through a wireless network;
step S520: determining whether the vehicle is detecting the specific electronic device and connecting to the specific electronic device; when the vehicle is not detecting the specific electronic device or is not connecting to the specific electronic device, executing step S510;
in other words, when the specific electronic device is not detected by the vehicle or is not connected to the vehicle, the processing unit of the vehicle executes step S510;
step S530: when the vehicle is detecting the specific electronic device and connecting to the specific electronic device, switching on the vehicle light of the vehicle for a default period of time;
step S540: determining whether the default period of time has passed;
step S550: when the default period of time has yet to pass, determining whether within the default period of time the vehicle is disconnected with the specific electronic device; when within the default period of time the vehicle is still connected to the specific electronic device, executing step S540;
in other words, when determining that within the default period of time the specific electronic device is not disconnected with the vehicle, the processing unit of the vehicle executes step S540;
step S560: when within the default period of time the vehicle is disconnected with the specific electronic device, switching off the vehicle light of the vehicle;
in other words, when determining that within the default period of time the specific electronic device is disconnected with the vehicle, the processing unit of the vehicle switches off the vehicle light;
step S570: when the default period of time has passed, determining whether the vehicle is disconnected with the specific electronic device; when the default period of time has passed and the vehicle is disconnected with the specific electronic device, executing step S560;
step S580: when the default period of time has passed and the vehicle is still connected to the specific electronic device, keeping the vehicle light switched on, and executing step S570.

First, as shown in step S510, a specific electronic device is scanned through a wireless network. Similarly, in some embodiments, the wireless network may be a Wi-Fi network or a Bluetooth network. Similarly, in some embodiments, the specific electronic device may establish a connection with the processing unit or the network connection unit in advance, thus allowing the vehicle to obtain in advance an identification data for connecting to the specific electronic device. In some embodiments, the specific electronic device may be a mobile device, such as a smart device, a Beacon, or a wireless key. When the specific electronic device is not detected (corresponding to step S520's no), the execution of steps returns to step S510. When the specific electronic device is detected and is connected to the vehicle (corresponding to step S520's yes), then as shown in step S530, a vehicle light of the vehicle is switched on for a default period of time, such as switched on for two minutes. Please note that the vehicle light may be configured to be mounted on the vehicle. Moreover, in some embodiments, the vehicle light may be a headlight of the vehicle. In some embodiments, the vehicle light may be any lights on the vehicle, such as a headlight, an indicator light, a daytime running lamp (DRL), a brake light, or a reversing light, etc. Furthermore, as shown in step S540, whether the default period of time has passed is determined. When the default period of time has not yet passed (corresponding to step S540's no), then as shown in step S550, whether within the default period of time the vehicle is disconnected with the specific electronic device is determined. When the default period of time has yet to pass (corresponding to step S550's no), the execution of steps returns to step S540. When within the default period of time the vehicle is disconnected with the specific electronic device (corresponding to step S550's yes), then as shown in step S560, the vehicle light is switched off. When the default period of time has passed (corresponding to step S540's yes), then as shown in step S570, whether the vehicle is disconnected with the specific electronic device is determined. When the vehicle is not yet disconnected with the specific electronic device (corresponding to step S570's no), then as shown in step S580, the vehicle light switched on for extended times, and subsequently, the execution of steps returns to step S570. When the vehicle is disconnected with the specific electronic device (corresponding to step S570's yes), then as shown in step S560, the vehicle light is switched off. In the present embodiment, when the default period of time has passed and the vehicle is still connected to the specific electronic device, the vehicle light would be continuously switched on until the specific electronic device and the vehicle disconnect with each other.

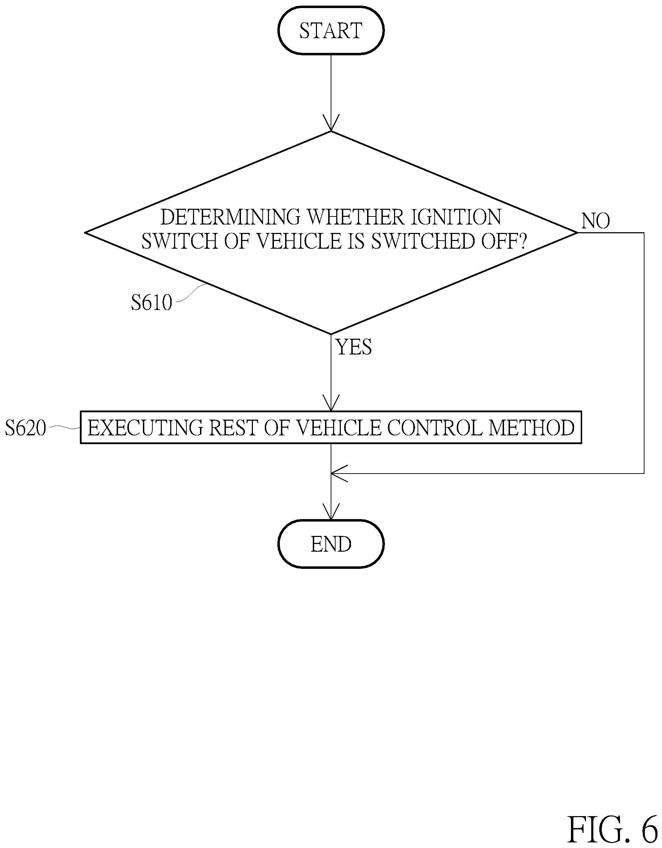

With reference to Fig. 6, the vehicle light control method includes the following steps:
step S610: determining whether the ignition switch of the vehicle is switched off; when the ignition switch of the vehicle is still on and not switched off, then omitting executing step S620;
step S620: when the ignition switch of the vehicle is switched off, executing the rest of the vehicle light control method by starting to scan for a specific electronic device through a wireless network.

As previously mentioned, the ignition switch is configured to control whether the vehicle is switched on. In some embodiments, only when the ignition switch is switched off would the processing unit of the vehicle start executing the vehicle light control method of the present invention. Fig. 6 presents a flow chart of another embodiment of the vehicle light control method of the present invention. The vehicle light control method of the present invention is executed by a processing unit of a vehicle to control a vehicle light of the vehicle. First, as shown in step S610, whether the ignition switch of the vehicle is switched off is determined. When the ignition switch is not switched off (corresponding to step S610's no), then the execution of steps ends. When the ignition switch is switched off (corresponding to step S610's yes), then as shown in step S620, the vehicle light control method of the present invention is executed, thus executing the previously mentioned steps S310 to S350, steps S410 to S460, or steps S510 to S580.

In other words, when the ignition switch switches on, the vehicle is accordingly switched on by the ignition switch. The vehicle light control method of the present invention is executed by a processing unit of a vehicle to control a vehicle light of the vehicle. When the ignition switch of the vehicle is switched off, by executing step S620, the processing unit of the vehicle would start executing the previously mentioned steps S310 to S350, steps S410 to S460, or steps S510 to S580.

Overall, the vehicle light control method of the present invention, and the vehicle of the present invention that executes the vehicle light control method, requires a signal from the specific electronic device for conducting smart control over the vehicle light, more particularly, to flexibly conduct control over the vehicle light of the vehicle in order to satisfy a user's need in different situations. By flexibly controlling how long the vehicle light should light up after the vehicle has parked (with the ignition switch switched off), the vehicle light may stay switched on longer than the default period of time for the user, thus allowing the user to enjoy a longer period of convenience with adequate lighting. All the while, the present invention still makes sure to switch off the vehicle light when necessary, such as when the specific electronic device disconnects with the vehicle, so as to conserve energy for the vehicle.

The vehicle light control method, in parts or in any specific embodiments, is programmed as a sequence of codes. The sequence of codes may be stored in hard media, such as in floppy disks, compact discs, hard drives, or any other types of machine-readable (computer-readable) storage media. The sequence of codes may also exist in any forms of computer program products. When the sequence of codes is loaded and compiled by a machine, the machine is considered a device that executes the vehicle light control method of the present invention. The sequence of codes may also be transported by, for instance, wires or cables, optical fibers, or any other forms of transportation medium. When being executed by a normal processing unit, such as a processor, the sequence of codes is able to create the aforementioned sequence of steps, which transforms a hardware to fulfill specialized functions with specific purpose. In other words, by applying the sequence of codes to a vehicle capable of executing the vehicle light control method and connecting to the specific electronic device, the vehicle would be upgraded by the present invention to be smarter in controlling the vehicle light, thus having specialized functions in controlling the vehicle light with specific purpose of improving a user experience of using the vehicle.

Although the above disclosed better embodiments for the present invention, these embodiments do not pose limitations to the present invention. Any skilled person in the technical field relating to the present invention, without departing from the spirits of the present invention and without departing from what is claimed by the present invention, should be able to make minute adjustments and polishes. The present invention encompasses what is claimed for the present invention as included in the subsequent part of this application.

An explanation for labels in the figures:
100 - the vehicle;
110 - for the vehicle light;
120 - the network connection unit;
130 - the ignition switch;
140 - the processing unit;
210 - the vehicle;
220 - the network;
230 - the specific electronic device;
S310, S320, S330, S340, S350 - steps;
S410, S420, S430, S440, S450, S460 - steps;
S510, S520, S530, S540, S550, S560, S570, S580 - steps;
S610, S620 - steps.

## Claims

1. A vehicle light control method, **characterized in that** the vehicle light control method is executed by a vehicle (100, 210) and applied to the vehicle (100, 210), and the vehicle light control method comprises the following steps:
scanning for a specific electronic device (230) through a wireless network by a processing unit (140) of the vehicle (100, 210) (S310, S410, S510);
when the vehicle (100, 210) is detecting the specific electronic device (230) and connecting to the specific electronic device (230) through the wireless network, switching on a vehicle light (110) of the vehicle (100, 210) (S330); and
when the vehicle (100, 210) is disconnected with the specific electronic device (230), switching off the vehicle light (110) of the vehicle (100, 210) (S350).

2. The vehicle light control method as claimed in claim 1, further comprising the following steps:
when the vehicle (100, 210) is detecting the specific electronic device (230) and is connecting to the specific electronic device (230), switching on the vehicle light (110) of the vehicle (100, 210) for a default period of time (S430, S530); and
when within the default period of time the vehicle (100, 210) is disconnected with the specific electronic device (230), switching off the vehicle light (110) of the vehicle (100, 210) (S460, S560).

3. The vehicle light control method as claimed in claim 1, further comprising the following steps:
determining whether an ignition switch (130) of the vehicle (100, 210) is switched off (S610); and
when the ignition switch (130) of the vehicle (100, 210) is switched off, and when the vehicle (100, 210) is detecting the specific electronic device (230) and connecting to the specific electronic device (230), switching on the vehicle light (110) of the vehicle (100, 210).

4. The vehicle light control method as claimed in claim 3, further comprising the following steps:
when the ignition switch (130) of the vehicle (100, 210) is switched off, and when the vehicle (100, 210) is detecting the specific electronic device (230) and connecting to the specific electronic device (230), switching on the vehicle light (110) of the vehicle (100, 210) for a default period of time.

5. The vehicle light control method as claimed in claim 4, further comprising the following steps:
when the default period of time has passed, determining whether the vehicle (100, 210) is disconnected with the specific electronic device (230) (S570); and
when the default period of time has passed and the vehicle (100, 210) is still connected to the specific electronic device (230), keeping the vehicle light (110) switched on until the specific electronic device (230) and the vehicle (100, 210) disconnect with each other.

6. A vehicle (100, 210), **characterized in that** the vehicle (100, 210) comprises:
a vehicle light (110);
a network connection unit (120), configured to connect a wireless network; and
a processing unit (140), connected to the vehicle light (110) and the network connection unit (120), and through the network connection unit (120), configured to connect a specific electronic device (230) through the wireless network;
wherein when the specific electronic device (230) is detected and the specific electronic device (230) is connected to the vehicle (100, 210) through the wireless network, the vehicle light (110) of the vehicle (100, 210) is switched on by the processing unit (140); and
when the specific electronic device (230) disconnects with the vehicle (100, 210), the vehicle light (110) of the vehicle (100, 210) is switched off by the processing unit (140).

7. The vehicle (100, 210) as claimed in claim 6, wherein when the specific electronic device (230) is detected and the specific electronic device (230) is connected to the vehicle (100, 210) through the wireless network, the vehicle light (110) of the vehicle (100, 210) is switched on by the processing unit (140) for a default period of time; and
when within the default period of time the vehicle (100, 210) is disconnected with the specific electronic device (230), the vehicle light (110) of the vehicle (100, 210) is switched off by the processing unit (140).

8. The vehicle (100, 210) as claimed in claim 6, further comprising:
an ignition switch (130), connected to the processing unit (140), configured to switch on the vehicle (100, 210);
wherein the processing unit (140) determines whether the ignition switch (130) of the vehicle (100, 210) is switched off; and
when the ignition switch (130) of the vehicle (100, 210) is switched off, and when the specific electronic device (230) is detected and the specific electronic device (230) is connected to the vehicle (100, 210) through the wireless network, the processing unit (140) switches on the vehicle light (110) of the vehicle (100, 210).

9. The vehicle (100, 210) as claimed in claim 8, wherein when the ignition switch (130) of the vehicle (100, 210) is switched off, and when the specific electronic device (230) is detected and the specific electronic device (230) is connected to the vehicle (100, 210) through the wireless network, the processing unit (140) switches on the vehicle light (110) of the vehicle (100, 210) for a default period of time.

10. The vehicle (100, 210) as claimed in claim 9, wherein when the processing unit (140) determines that the default period of time has passed, the processing unit (140) further determines whether the vehicle (100, 210) is disconnected with the specific electronic device (230); and
when the default period of time has passed and the specific electronic device (230) is still connected to the vehicle (100, 210) through the wireless network, the processing unit (140) keeps the vehicle light (110) switched on until the specific electronic device (230) and the vehicle (100, 210) disconnect with each other.
